# EUROPEAN PATENT SPECIFICATION

(11) **EP 2 849 450 B1**
(45) Date of publication and mention of the grant of the patent: **26.09.2018**
(21) Application number: 14004049.4
(22) Date of filing: 27.12.2011
(51) Int. Cl.: H04N 21/4223

(54) **Content access control for multi-user systems**
Inhaltszugriffskontrolle für Mehrbenutzersysteme
Commande d'accès au contenu pour des systèmes multi-utilisateurs

(30) Priority: 24.12.2010 US 97850310
(43) Date of publication of application: 18.03.2015
(62) Divisional of application: 11813903.9
(73) Proprietor: Telefonaktiebolaget LM Ericsson (publ), 164 83 Stockholm (SE)
(72) Inventor: Gavita, Edoardo, Laval, H7M 4N4 (CA)
(74) Representative: Ericsson

(56) References cited:
- US-A1- 2007 033 607
- US-A1- 2009 138 805
- US-B1- 7 134 130

## Description

### TECHNICAL FIELD

This disclosure relates generally to user validation and profile access based on the presence of a plurality of users.

### BACKGROUND

In an Internet Protocol Television (IPTV) environment, as in many other similar fields, users can be provided with the ability to log in (in some implementations users are required to log in) to access the account. In addition to an account validation, each account can have a plurality of users associated with it, each user having an individual log in. By creating profiles for different users, the account administrator (who is in the context of this discussion one of the users that is responsible for setting up accounts) can create profiles associated with each of the users that can be used to restrict access to content.

Typically logging in to an IPTV environment involves interacting with either the IPTV Set Top Box (STB) or both the IPTV STB and network elements. This is commonly done by entering a pass phrase as will be discussed in more detail below. This is often difficult for some users, and cumbersome for most users. It also does not account for the presence of more than a single user at any time. Thus if two account holders, a parent and a child for example, are both present, one of the two accounts must be used. If the account with the most restrictions is used, the other account holder cannot typically override the content filtering without logging in to the system, which may then provide access to some content that would preferably not be shown. The only prior art remedy is to create a third account that would then be used for the two account holders when together. This is cumbersome and creates administrative problems that are preferably avoided.

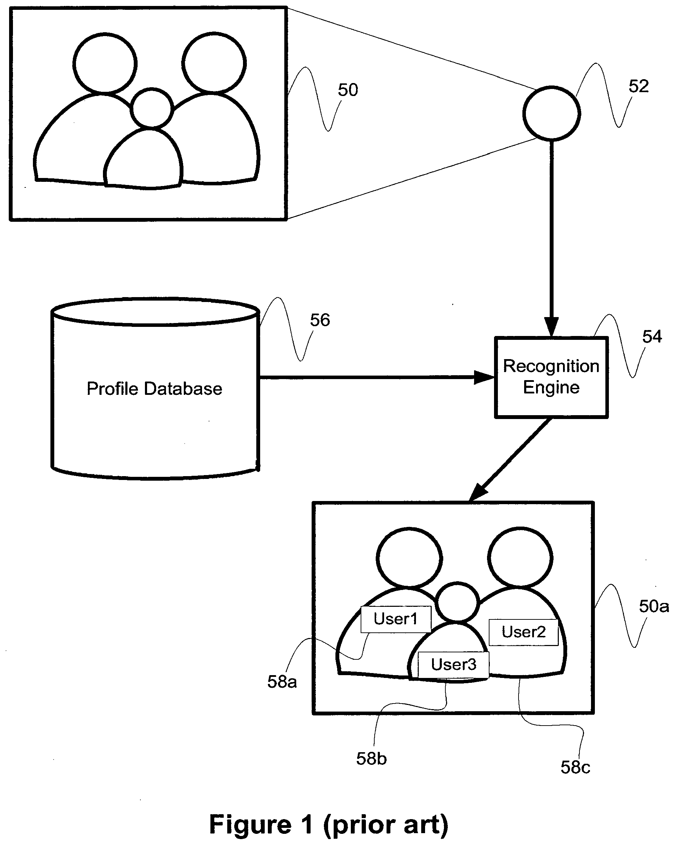

In an unrelated art field, image processing has allowed for individuals in photographs to be identified based on facial characteristics. As illustrated in figure 1, a photograph with three people in it is captured by capture device 52, and is then passed to a recognition engine 54. Recognition engine 54 can isolate the faces in the photograph with sufficiently high accuracy, and can then compare the facial features of each identified face to the contents of profile database 56. Based on the contents of the profile database 56, recognition engine 54 can modify photograph 50 to produce photograph 50a which includes metadata identifying each of user1 58a, user2 58b and user3 58c. These features can be performed by some cameras, some camera phones, and by many computers.

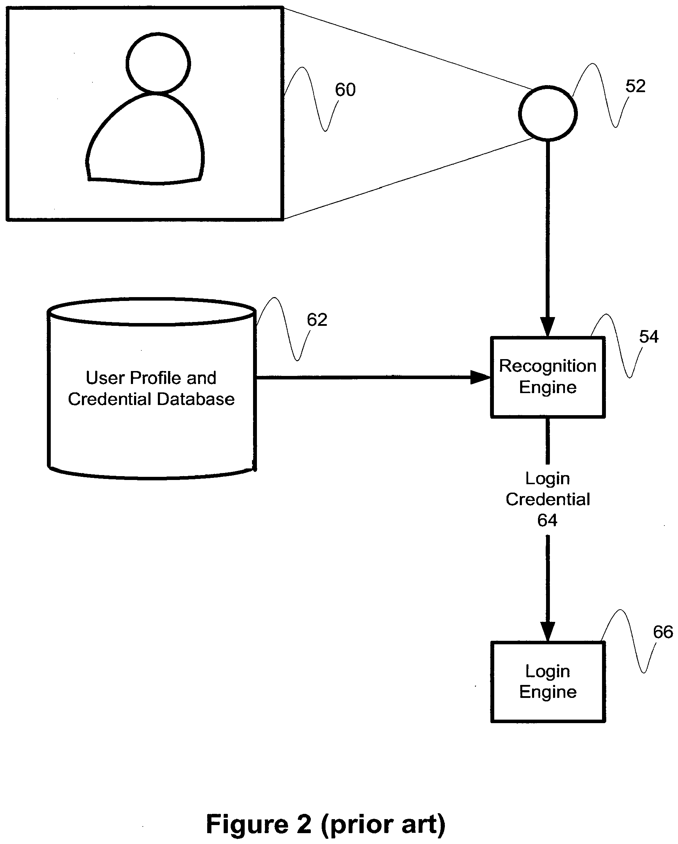

In the field of computer security, it is known that a biometric reading, including a facial recognition scan, can be used as a login credential into some computing systems. Figure 2 illustrates such an embodiment. A photograph of a user 60 is captured by capture device 52 and provided to recognition engine 54. Recognition Engine 54 accesses content in user profile and credential database 62, to identify the user in photograph 60 and then provides the login credential 64 associated with that user to login engine 66. At this point the user is able to login to the computer system.

As discussed above, in a conventional IPTV environment, a user interacts with an STB 70 connected to a display 68. The STB 70 provides a login prompt 72 on display 68. The user makes use of remote control 74 to provide a pass phrase, or typically a Personal Identification Number (PIN). The PIN, as discussed above, is an account specific login credential that is then used to validate the user and provide access to an account. In some embodiments, the user is requested to select a login from a menu and is then prompted for the PIN.

At present logging in to an IPTV STB is done with a user specific credential, and requires that a controller with a form factor limited input mechanism is employed. This is far from ideal. Therefore, it would be desirable to provide a system and method that obviate or mitigate the above described problems.

Document US 2009/0138805 A1 discloses a method to control an electronic media device based on personalized media preferences of different users. One or more users are automatically identified, e.g., with the help of a camera. The output of the electronic media device may is determined based on media preferences associated with the identified users.

Document US 2007/0033607 A1 discloses a method that allows a user to control the display, pausing or recording of TV programs based on the user's presence in the program viewing area. The method includes controlling the program display based on a priority assigned to the user. E.g., the programs that are available to minor children can be controlled.

Document D3 US 7134130 B1 discloses a method for controlling information that is shown on a display, e.g. a TV, when an additional user enters the area having access to the display. The detection of the new user is performed with a visual feature recognition device, or a sound detection device.

### SUMMARY

It is an object of the present disclosure to obviate or mitigate at least one disadvantage of the prior art.

In a first aspect, there is provided a method of determining permissions to access content in an Internet Protocol Television (IPTV) node. The method comprises the steps of receiving an indication that a plurality of viewers is present; retrieving a plurality of profiles, each profile in the plurality associated with one of the plurality of viewers; and determining the permissions in accordance with the plurality of retrieved profiles.

In an embodiment of the first aspect, the step of receiving is preceded by the steps of matching a plurality faces in a captured image to facial recognition patterns associated with user profiles; and forwarding an indication that a plurality of users, each associated with one of the user profiles is present. Optionally, the step of matching is preceded by the step of capturing the image.

In a further embodiment, the IPTV node is one of a set top box and a network infrastructure element. In some embodiments where the IPTV node is a set top box, the step of receiving is preceded by capturing an image at a set top box, and generating an indication identifying the plurality of users in accordance with the image captured at the set top box. In further embodiments, the step of retrieving is performed by a processor in conjunction with a database interface, and wherein the step of determining the permissions is performed by a processor accessing a memory storing a set of instruction.

In yet a further embodiment, the step of determining includes setting the permissions based on one of the most restrictive profile in the plurality of retrieved profiles and the least restrictive profile in the plurality of retrieved profiles. In another embodiment, the step of determining includes determining that the plurality of retrieved users profiles includes a profile having conditional permissions; and processing the conditional permissions to determine the permissions to access content based on the plurality of retrieved profiles.

In a second aspect, there is provided a permission management system that comprises a profile processor. The profile processor has a communications interface and a database interface. The communications interface receives an indication identifying a plurality of users through a communications interface. The database interface retrieves profiles associated with each of the users in the identified plurality from a user profile database. The profile processor determines access permissions for the plurality of users in accordance with permissions associated with each of the plurality of identified users in the retrieved profiles.

In embodiments of the second aspect, the permission management system further includes the user profile database, the user profile database for storing profiles associated with users. In another embodiment, the database interface is operatively connected to a communications network for remotely accessing the user profile database.

In a further embodiment, the permission management system includes a recognition engine that receives an image of a plurality of users from an image capture device, generates an indication identifying the plurality of users in accordance with facial recognition patterns stored in association with the stored profiles in the user profile database and the received image and forwards the generated indication to the profile processor. Optionally, the image capture device is connected to another device in communication with the recognition engine.

In a further embodiment, the communications interface is operatively connected to a communications network for communicating with a recognition engine remotely located from the permission management system.

Other aspects and features of the present disclosure will become apparent to those ordinarily skilled in the art upon review of the following description of specific embodiments of the disclosure in conjunction with the accompanying figures.

### BRIEF DESCRIPTION OF THE DRAWINGS

Embodiments of the present disclosure will now be described, by way of example only, with reference to the attached Figures, wherein:
Figure 1 is a block diagram figure illustrating recognition of faces in a photograph;
Figure 2 is a block diagram figure illustrating a user login based on facial recognition;

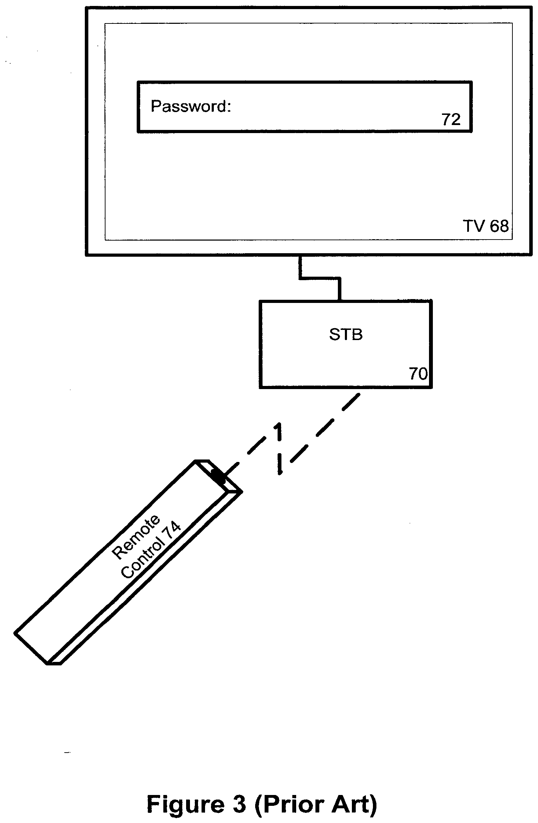

Figure 3 is a block diagram illustrating a convention IPTV STB login process;
Figure 4 is a block diagram illustrating a multi-user login system;
Figure 5 is a flow chart illustrating a method of user validation;
Figure 6 is a flow chart illustrating an embodiment of the method of Figure 5;
Figure 7 is a flow chart illustrating an embodiment of the method of Figure 5;
Figure 8 is a flow chart illustrating an embodiment of the method of Figure 5;
Figure 9 is a block diagram illustrating a user profile for a multi-user login system;
Figure 10 is a flow chart illustrating a method of the present disclosure;
Figure 11 is a flow chart illustrating a method of account creation; and
Figure 12 is a block diagram illustrating an exemplary system of the present disclosure.

### DETAILED DESCRIPTION

The present disclosure is directed to a system and method for the generation of and log in using multi-user accounts.

Reference may be made below to specific elements, numbered in accordance with the attached figures. The discussion below should be taken to be exemplary in nature, and not as limiting of the scope of the present disclosure. The scope of the present disclosure is defined in the claims, and should not be considered as limited by the implementation details described below, which as one skilled in the art will appreciate, can be modified by replacing elements with equivalent functional elements.

As IPTV features are enhanced, many functions are being provided that are often not thought of as television related. One such feature is video-chatting or video-conferencing using the display attached to the IPTV STB. A camera is provided that interacts with the STB, and allow the user to capture images and video and to share them with other IPTV users. This is increasing the number of STB's and televisions that have access to an image capture device. Typically this image capture device is oriented so that a field of view similar to the preferred viewing angles of the television is provided to the camera (often by placing the camera in the bezel of the display). One side effect is that the people watching the television can then be seen by the camera.

In the present disclosure, the image capture device (typically referred to as a camera) is employed as a user login and validation interface. However, instead of encountering confusion when one or more users are present, the STB determines an access level that is appropriate for the users present. This can be achieved in one of a number of fashions, as will be discussed below. Additionally, when multiple viewers are identified, a registered user (in some embodiments only the administrator) can be prompted to create a profile for any users not known in the image. This facilitates a simpler user recognition system.

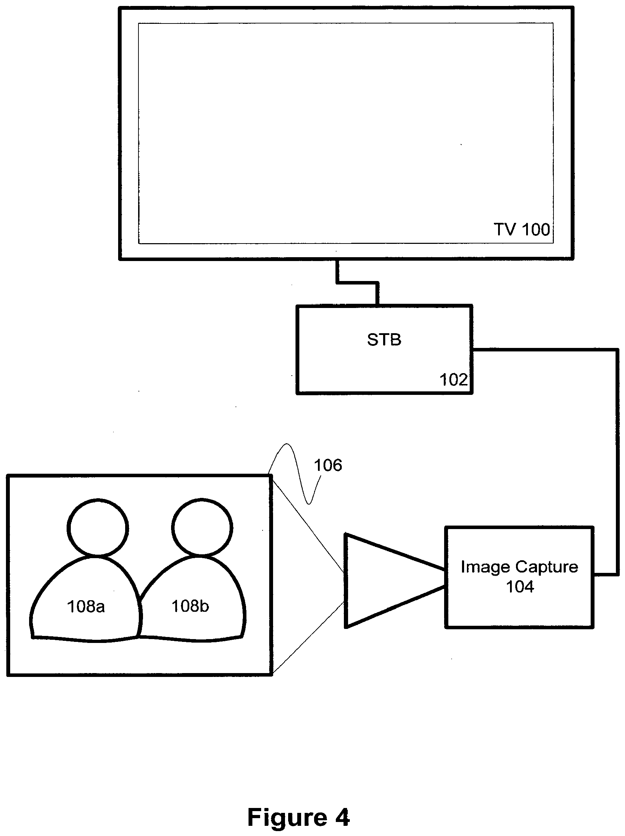

Figure 4 illustrates a basic configuration of a system as discussed above. A display 100 is connected to a STB 102, which is connected to an image capture device 104. One skilled in the art will appreciate that the image capture device 104 can be integrated into the display 100, or connected to the STB 102 through display 100.

Image capture device 104 captures image 106 having two people 108a and 108b in the image. This image is passed to STB 102. In some embodiments the identification of the users is done in advance of other processing, and is performed either at the capture device 104, or at the STB 102. In other embodiments, the image can be sent to an IPTV network element, such as a Resource and Admission Control node, for processing. Transmitting the image to the network is preferably done only in embodiments where the user validation and login is performed in the network and not in the STB 102.

Upon determining the identities of the viewers 108a and 108b, STB can provide a level of access that is determined in accordance with the two users. In some embodiments, if the two users both have profiles, the more restrictive set of permissions is used, whereas in other embodiments the less restrictive set of permissions is used. In other embodiments, which will be discussed later, permissions and access can be based on conditions set in the user profiles to recognize conditions where one user is present with either a specific user or a class of users.

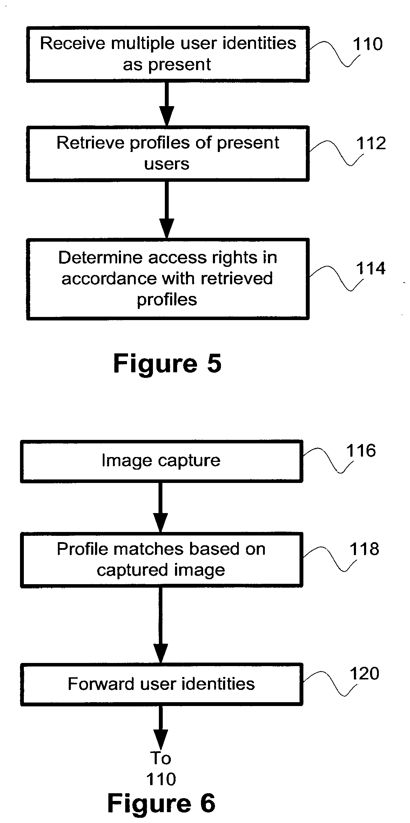

Figure 5 illustrates a method of the present invention. In step 110, multiple user identities are received indicating their presence. In step 112, the profiles of the present users are retrieved, and in step 114, the access rights and permissions are determined in accordance with the retrieved profiles. One skilled in the art will appreciate that this process can be performed either at the STB or at a network node without departing from the scope of the present disclosure. As long as two profiles are authenticated as a part of, or as a precursor to, step 110, the rest of the method can be performed.

In Figure 6, further precursor steps to step 110 are shown. In step 116, an image or a video is captured. Based on the captured image or video, profiles are matched to the detected users in step 118. The user identities, and any credentials required for further processing are then forwarded in step 120 and the process continues with step 110. One skilled in the art will appreciate that the step of capturing video in 116 must be performed at or near the STB, but all other steps can be performed either in the STB or in the network nodes.

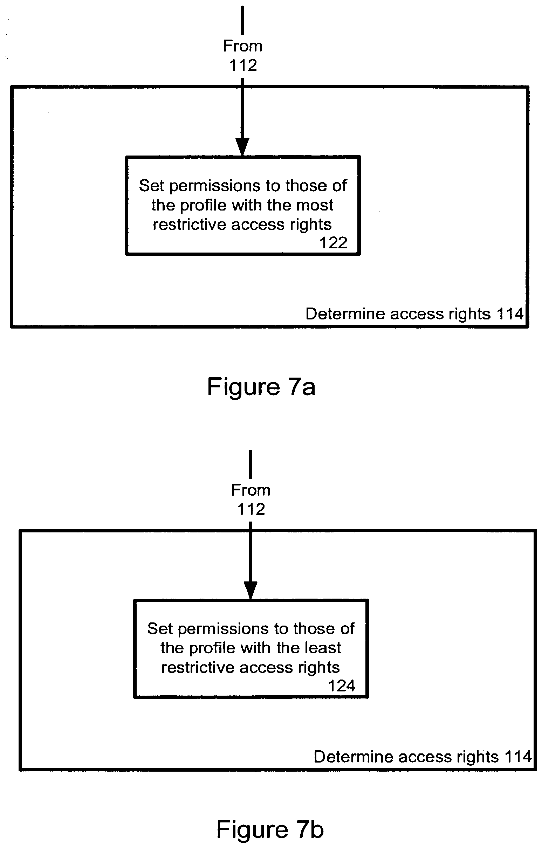

Step 114 of Figure 5 can be performed in a number of different ways as was mentioned above. In Figure 7a, upon completion of step 112, the step of determining access rights in step 114 includes setting access rights to the permissions associated with the more restrictive profile. This means that when a parent and child are both watching television, the chances of the child accidentally watching inappropriate content are greatly reduced. If, however, the parent wants full access to content in the presence of a child, the method of Figure 7b can be employed. In place of step 122, step 124 is performed and the access rights are set in accordance with the least restrictive set of permissions. This allows the parent to determine what content is appropriate for the child on a case by case basis.

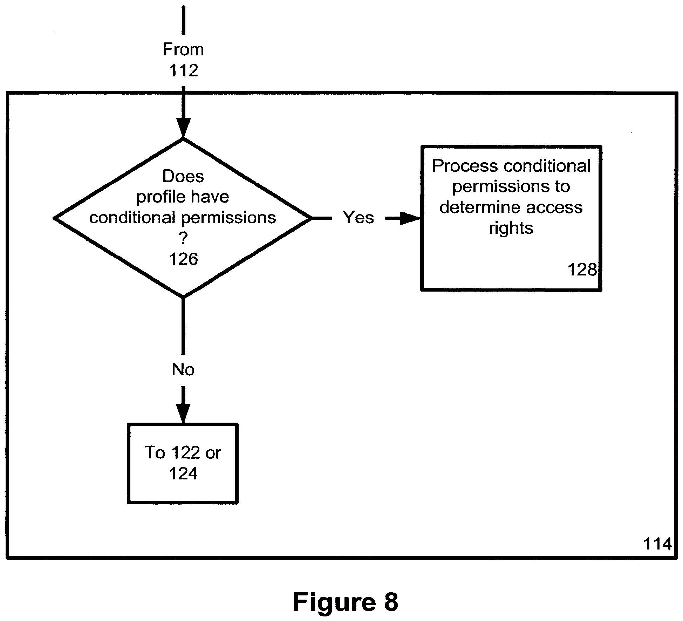

In a further embodiment, the set of permissions associated with a user can be made conditional. This allows a child's profile to be very restrictive when the child is alone in front of the television, and more liberal in the presence of another user. Such a method is illustrated in Figure 8. In step 114 a further decision is made. In step 126, the determination of whether or not one of the profiles has conditional permissions is made. If no conditional permissions are present, then the process can continue to either step 122 or 124. If conditional permissions are present in the profile, the process continues to step 128 where the conditional permissions are processed to determine the access rights.

Conditional permissions can be set in any number of ways. A child's allowed content may be very restricted alone, less restricted in the presence of a profiled adult, and even less restrictive in the presence of a particular user (such as a parent). The presence of the parent can provide access to content either for the duration that the parent is present, or for a buffer period following. The buffer period can be a fixed duration of time (so that programming is not locked if the parent leaves the room briefly), or for the length of a program. Other variations can be permitted as well.

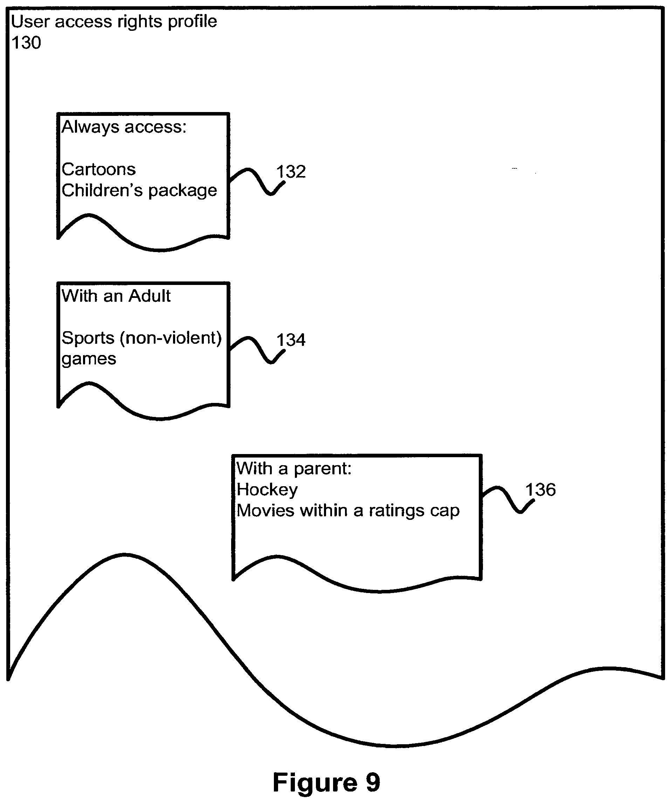

Figure 9 illustrates an exemplary embodiment of a profile 130 with conditional permissions. When the profiled user is alone, a set of permissions 132 allows the user access to all channels in a children's programming package as well as any other content flagged as a cartoon. If the user is determined to be in the presence of an adult, a set of permissions 134 allows access to sports without violent content and IPTV content such as games. In the presence of a specified user, such as a father, the set of permissions 136 expands to include hockey, but not other sports with violent content, and movies that fall below a specified ratings level.

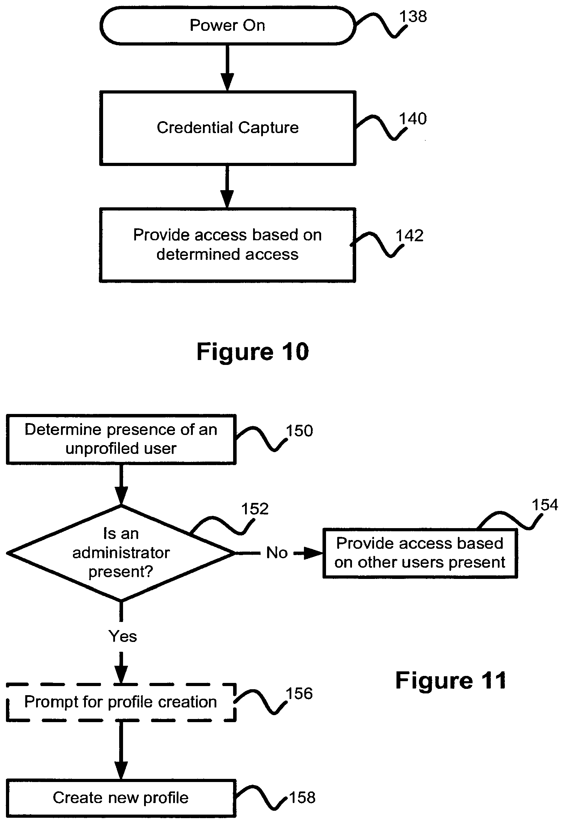

In figure 10 another manner of viewing the above described processes is presented. In step 138, the set top box is initialized. In step 140 the credentials of the present users are captured for processing and in step 142, access based on determined access rights is provided. Following step 142, the process can return to step 140 so that the permissions can change when a new user is detected. This would allow adults to be watching a violent or otherwise unsuitable content for a child, and then have the system lock out the content when a child enters the viewing area. When content is locked out, it can be paused and replaced with other content, or a blank screen. In some embodiments a barker channel can be displayed advertising network features, and explaining why the content has been blocked. The adult can then be provided with the ability to provide a one time override to the restriction.

In the above discussion, focus has been paid to determining access rights based on detecting a plurality of registered users. Creating user profiles is often a time consuming and difficult process. Because users with no profile will not be recognized as users of the STB, the detection of a face that does not match to a
known profile can be used during the profile creation process. Figure 11 illustrates one such method. In step 150, the presence of an unprofiled user is detected. One skilled in the art will appreciate that if all users have facial recognition patterns associated with their profiles, any non-matched but detected face can be assumed to be an unprofiled user.

In step 152 a determination is made about the presence of an administrator or other user that can create profiles. If no such user is present, access based on the recognized users that are present, or access based on a "minimal" pre-defined set of criteria, is provided. If an administrator is present, a new profile is created in step 158. This can optionally be preceded by a step of prompting the administrator to confirm the creation of the new profile. This prompt can be intrusive or be designed to blend into the background.

When a profile is created, it can be created as a generic profile that is then presented for modification, or the administrator can be offered a number of different options to effectively add the user to a particular class of user. The richer the information provided about each user and stored in the associated profile, the more variety can be added to the conditions in the conditional profiles discussed above.

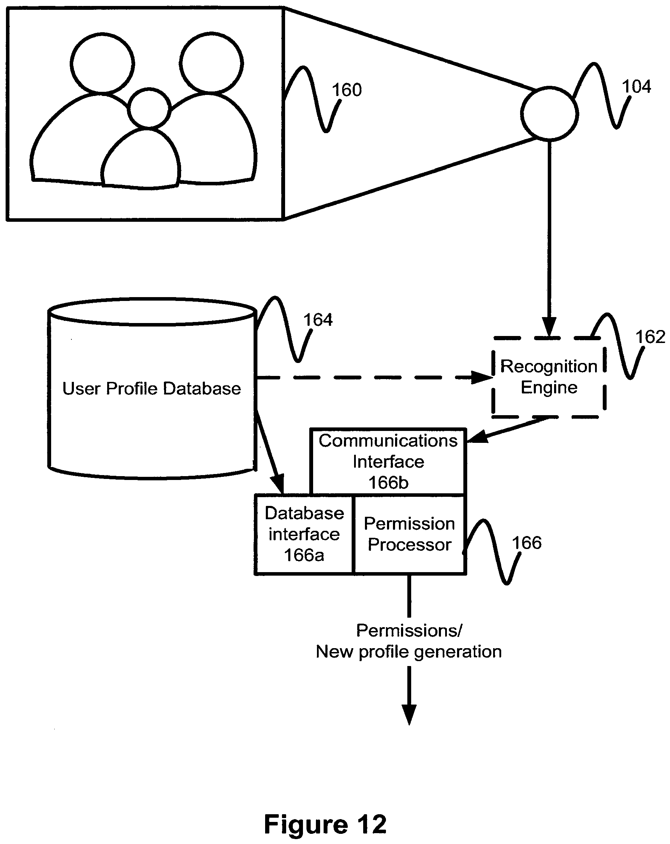

Figure 12 illustrates an exemplary embodiment of the present disclosure in block diagram form. An image 160 is captured by capture device 104 and is provided to recognition engine 162. Recognition engine makes use of facial recognition patterns associated with the user profiles stored in User Profile Database 164. An indication of the users detected in the captured image is provided to Permission Processor 166. Permission processor 166 determines the permissions and access rights that are available based on the detected viewers. As noted above, if a plurality of profiled users are present, the permission processor can determine the permissions and access rights according to either conditional permissions set in profiles, or based on rules that apply to all profiles. In other embodiments, permission processor can determine, in the presence of an unprofiled viewer, that another viewer has sufficient permissions to create a profile for the unprofiled viewer.

One skilled in the art will appreciate that recognition engine 162 is not necessary for the function of the system, so long as permission processor receives a indication that a plurality of viewers are present. Preferably the indication includes identification of the users in the plurality, but this can be obtained separately if need be.

Embodiments of the present disclosure may be represented as a software product stored in a machine-readable medium (also referred to as a computer-readable medium, a processor-readable medium, or a computer usable medium having a computer readable program code embodied therein). The machine-readable medium may be any suitable tangible medium including a magnetic, optical, or electrical storage medium including a diskette, compact disk read only memory (CD-ROM), digital versatile disc read only memory (DVD-ROM) memory device (volatile or non-volatile), or similar storage mechanism. The machine-readable medium may contain various sets of instructions, code sequences, configuration information, or other data, which, when executed, cause a processor to perform steps in a method according to an embodiment of the present disclosure. Those of ordinary skill in the art will appreciate that other instructions and operations necessary to implement the described disclosure may also be stored on the machine-readable medium. Software running from the machine-readable medium may interface with circuitry to perform the described tasks.

## Claims

1. A method of determining permissions to access content in an Internet Protocol Television, IPTV, node, the method comprising:
receiving (110) an indication that a plurality of viewers is present for viewing content from the IPTV node;
retrieving (112) a plurality of profiles, each profile in the plurality associated with one of the plurality of viewers;
determining (114, 126) that the plurality of retrieved user profiles includes a first profile (130) having conditional permissions, wherein the conditional permissions of the first profile include a first set of permissions with less access rights and a second set of permissions with more access rights; and
processing (128) the conditional permissions in the first profile (130) in dependence on the specific user or user class associated with one or more other profiles in the plurality, to determine the permissions to apply to the plurality of viewers for accessing content from the IPTV node, wherein processing the conditional permissions in the first profile (130) comprises applying the second set of permissions in the presence of the specific user or user class with the one or more other profiles, and wherein the second set of permissions is still granted for a buffer period after the specific user or user class with the one or more other profiles has left.

2. The method of claim 1 wherein the step of receiving is preceded by the steps of:
matching (118) a plurality of faces in a captured image to facial recognition patterns associated with user profiles; and
forwarding (120) the indication that the plurality of viewers is present, each profile being associated with one of the viewers matched in the captured image.

3. The method of claim 2 wherein the step of matching is preceded by the step of capturing (116) the image.

4. The method of claim 1 wherein the IPTV node is a set top box (102).

5. The method of claim 1 wherein the IPTV node is a network infrastructure element.

6. The method of claim 1 wherein the step of receiving is preceded by capturing an image at a set top box, and generating an indication identifying the plurality of viewers in accordance with the image captured at the set top box.

7. The method of claim 1 wherein:
the step of retrieving is performed by a processor (166) in conjunction with a database interface (166a), and wherein the step of determining the permissions is performed by a processor accessing a memory storing a set of instructions, wherein the step of processing the conditional permissions is to determine the permissions to apply to the plurality of viewers for accessing content from the IPTV node.

8. The method of claim 1 wherein the step of determining includes setting (122) the permissions based on the most restrictive profile in the plurality of retrieved profiles.

9. The method of claim 1 wherein the step of processing the conditional permissions to determine the permissions to apply to the plurality of viewers for accessing content from the IPTV node includes setting (124) the permissions based on the least restrictive profile in the plurality of retrieved profiles.

10. The method of claim 1 wherein the the buffer period is a fixed duration of time, or for the length of a program.

11. A machine-readable medium comprising one of sets of instructions, code sequences and configuration information, which, when executed, cause a processor to perform all steps in a method according to any one of claims 1 to 9.

12. A permission management system configured to determine permissions to access content in an Internet Protocol Television, IPTV, node, comprising:
a profile processor having:
a communications interface (166b) configured to receive an indication indicating that a plurality of users are present for accessing content, and
a database interface (166a) configured to retrieve a plurality of profiles from a user profile database, each profile corresponding to one of the users in the plurality of users and having permissions for the corresponding user to control content access by the corresponding user;
wherein the profile processor is configured to:
- determine that the plurality of retrieved profiles includes a first profile (130) having conditional permissions, wherein the conditional permissions of the first profile include a first set of permissions with less access rights and a second set of permissions with more access rights; and
- process the conditional permissions in the first profile in dependence on the specific user or user class associated with one or more other profiles in the plurality, to determine the permissions to apply to the plurality of users for accessing content, wherein processing the conditional permissions in the first profile (130) comprises applying the second set of permissions in the presence of the specific user or user class with the one or more other profiles, and wherein the second set of permissions is still granted for a buffer period after the specific user or user class with the one or more other profiles has left.

13. The permission management system of claim 11 further including the user profile database (164), the user profile database being configured to store profiles associated with users; or
wherein the database interface is operatively connected to a communications network configured to remotely access the user profile database; or
wherein the communications interface is operatively connected to a communications network configured to communicate with a recognition engine remotely located from the permission management system.

14. The permission management system of claim 11 further including a recognition engine (162) configured to:
- receive an image of the plurality of users from an image capture device (104);
- generate an indication identifying the plurality of users in accordance with facial recognition patterns stored in association with the stored profiles in the user profile database and the received image; and
- forward the generated indication to the profile processor.

15. The permission management system of claim 13 wherein the image capture device is connected to another device in communication with the recognition engine.

## Patentansprüche

1. Verfahren zur Bestimmung von Berechtigungen zum Zugriff auf Inhalt in einem Internetprotokoll-Fernseh, IPTV,-Knoten, wobei das Verfahren umfasst:
Empfangen (110) einer Anzeige, dass eine Mehrzahl von Zusehern zum Sehen von Inhalt vom IPTV-Knoten vorhanden ist;
Abrufen (112) einer Mehrzahl von Profilen, wobei jedes Profil in der Mehrzahl mit einem der Mehrzahl von Zusehern assoziiert ist;
Bestimmen (114, 126), dass die Mehrzahl von abgerufenen Benutzerprofilen ein erstes Profil (130) mit bedingten Berechtigungen umfasst, wobei die bedingten Berechtigungen des ersten Profils einen ersten Satz von Berechtigungen mit weniger Zugriffsrechten und einen zweiten Satz von Berechtigungen mit mehr Zugriffsrechten umfassen; und
Verarbeiten (128) der bedingten Berechtigungen im ersten Profil (130) in Abhängigkeit vom spezifischen Benutzer oder der spezifischen Benutzerklasse, der/die mit einem oder mehreren anderen Profilen in der Mehrzahl assoziiert ist, um die Berechtigungen zu bestimmen, die auf die Mehrzahl von Zusehern zum Zugreifen auf Inhalt vom IPTV-Knoten angewendet werden sollen, wobei das Verarbeiten der bedingten Berechtigungen im ersten Profil (130) ein Anwenden des zweiten Satzes von Berechtigungen bei Vorhandensein des spezifischen Benutzers oder der spezifischen Benutzerklasse mit dem einen oder den mehreren anderen Profilen umfasst, und wobei der zweite Satz von Berechtigungen nach dem Verlassen des spezifischen Benutzers oder der spezifische Benutzerklasse mit dem einen oder den mehreren Profilen noch für eine Pufferperiode erteilt wird.

2. Verfahren nach Anspruch 1, wobei dem Schritt des Empfangens die folgenden Schritte vorangehen:
Vergleichen (118) einer Mehrzahl von Gesichtern in einem aufgenommenen Bild mit Gesichtserkennungsmustern, die mit Benutzerprofilen assoziiert sind; und
Weiterleiten (120) der Anzeige, dass die Mehrzahl von Zusehern vorhanden ist, wobei jedes Profil mit einem der Zuseher assoziiert ist, die im aufgenommenen Bild verglichen werden.

3. Verfahren nach Anspruch 2, wobei dem Schritt des Vergleichens der Schritt des Aufnehmens (116) des Bildes vorangeht.

4. Verfahren nach Anspruch 1, wobei der IPTV-Knoten eine Set-Top-Box (102) ist.

5. Verfahren nach Anspruch 1, wobei der IPTV-Knoten ein Netzwerkinfrastrukturelement ist.

6. Verfahren nach Anspruch 1, wobei dem Schritt des Empfangens ein Aufnehmen eines Bildes an einer Set-Top-Box und Erzeugen einer Anzeige vorangehen, welche die Mehrzahl von Zusehern gemäß dem an der Set-Top-Box aufgenommenen Bild identifiziert.

7. Verfahren nach Anspruch 1, wobei:
der Schritt des Abrufens durch einen Prozessor (166) in Verbindung mit einer Datenbankschnittstelle (166a) ausgeführt wird, und wobei der Schritt des Bestimmens der Berechtigungen von einem Prozessor ausgeführt wird, der auf einen Speicher zugreift, der einen Satz von Anweisungen speichert, wobei der Schritt des Verarbeitens der bedingten Berechtigungen zum Bestimmen der Berechtigungen dient, die auf die Mehrzahl von Zusehern zum Zugreifen auf Inhalt vom IPTV-Knoten angewendet werden sollen.

8. Verfahren nach Anspruch 1, wobei der Schritt des Bestimmens ein Festlegen (122) der Berechtigungen basierend auf dem restriktivsten Profil in der Mehrzahl von abgerufenen Profilen umfasst.

9. Verfahren nach Anspruch 1, wobei der Schritt des Verarbeitens der bedingten Berechtigungen zum Bestimmen der Berechtigungen, die auf die Mehrzahl von Zusehern zum Zugreifen auf Inhalt vom IPTV-Knoten angewendet werden sollen, ein Festlegen (124) der Berechtigungen basierend auf dem am wenigstens restriktiven Profil in der Mehrzahl von abgerufenen Profilen umfasst.

10. Verfahren nach Anspruch 1, wobei die Pufferperiode eine feste Zeitdauer oder für die Länge eines Programms ist.

11. Maschinenlesbares Medium, umfassend einen von Sätzen von Anweisungen, Codefolgen und Konfigurationsinformationen, die bei Ausführung einen Prozessor zum Ausführen aller Schritte in einem Verfahren nach einem der Ansprüche 1 bis 9 veranlassen.

12. Berechtigungsverwaltungssystem, das zum Bestimmen von Berechtigungen zum Zugriff auf Inhalt in einem Internetprotokoll-Fernseh, IPTV,-Knoten, konfiguriert ist und umfasst:
einen Profilprozessor, der aufweist:
eine Kommunikationsschnittstelle (166b), die so konfiguriert ist, dass sie eine Anzeige empfängt, die anzeigt, dass eine Mehrzahl von Benutzern zum Zugreifen auf Inhalt vorhanden ist, und
eine Datenbankschnittstelle (166a), die zum Abrufen einer Mehrzahl von Profilen von einer Benutzerprofil-Datenbank konfiguriert ist, wobei jedes Profil einem der Benutzer in der Mehrzahl von Benutzern entspricht und Berechtigungen für den entsprechenden Benutzer zum Steuern von Inhaltszugriff durch den entsprechenden Benutzer aufweist;
wobei der Profilprozessor konfiguriert ist zum:
- Bestimmen, dass die Mehrzahl von abgerufenen Profilen ein erstes Profil (130) mit bedingten Berechtigungen umfasst, wobei die bedingten Berechtigungen des ersten Profils einen ersten Satz von Berechtigungen mit weniger Zugriffsrechten und einen zweiten Satz von Berechtigungen mit mehr Zugriffsrechten umfassen; und
- Verarbeiten der bedingten Berechtigungen im ersten Profil in Abhängigkeit vom spezifischen Benutzer oder der spezifischen Benutzerklasse, der/die mit einem oder mehreren anderen Profilen in der Mehrzahl assoziiert ist, um die Berechtigungen zu bestimmen, die auf die Mehrzahl von Benutzern zum Zugreifen auf Inhalt angewendet werden sollen, wobei das Verarbeiten der bedingten Berechtigungen im ersten Profil (130) ein Anwenden des zweiten Satzes von Berechtigungen bei Vorhandensein des spezifischen Benutzers oder der spezifischen Benutzerklasse mit dem einen oder den mehreren anderen Profilen umfasst, und wobei der zweite Satz von Berechtigungen nach dem Verlassen des spezifischen Benutzers oder der spezifische Benutzerklasse mit dem einen oder den mehreren Profilen noch für eine Pufferperiode erteilt wird.

13. Berechtigungsverwaltungssystem nach Anspruch 11, ferner umfassend die Benutzerprofil-Datenbank (164), wobei die Benutzerprofil-Datenbank zum Speichern von Profilen konfiguriert ist, die mit Benutzern assoziiert sind; oder
wobei die Datenbankschnittstelle mit einem Kommunikationsnetzwerk, das zum Fernzugriff auf die Benutzerprofil-Datenbank konfiguriert ist, funktionell verbunden ist;
wobei die Kommunikationsschnittstelle mit einem Kommunikationsnetzwerk, das zum Kommunizieren mit einer Erkennungsmaschine konfiguriert ist, die vom Berechtigungsverwaltungssystem entfernt angeordnet ist, funktionell verbunden ist.

14. Berechtigungsverwaltungssystem nach Anspruch 11, ferner umfassend eine Erkennungsmaschine (162), die konfiguriert ist zum:
- Empfangen eines Bildes der Mehrzahl von Benutzern von einer Bildaufnahmevorrichtung (104);
- Erzeugen einer Anzeige, welche die Mehrzahl von Benutzern gemäß Gesichtserkennungsmustern, die in Verbindung mit den gespeicherten Profilen in der Benutzerprofil-Datenbank gespeichert werden, und dem empfangenen Bild identifiziert; und
- Weiterleiten der erzeugten Anzeige an den Profilprozessor.

15. Berechtigungsverwaltungssystem nach Anspruch 13, wobei die Bildaufnahmevorrichtung mit einer anderen Vorrichtung in Kommunikation mit der Erkennungsmaschine verbunden ist.

## Revendications

1. Procédé de détermination de permissions d'accès à un contenu dans un noeud de télévision de protocole Internet, IPTV, le procédé comprenant :
la réception (110) d'une indication qu'une pluralité de spectateurs sont présents pour regarder un contenu depuis le noeud IPTV ;
la récupération (112) d'une pluralité de profils, chaque profil de la pluralité étant associé à l'un de la pluralité de spectateurs ;
la détermination (114, 126) que la pluralité de profils d'utilisateurs récupérés comprennent un premier profil (130) comportant des permissions conditionnelles, dans lequel les permissions conditionnelles du premier profil comprennent un premier ensemble de permissions avec moins de droits d'accès et un deuxième ensemble de permissions avec plus de droits d'accès ; et
le traitement (128) des permissions conditionnelles dans le premier profil (130) en fonction de l'utilisateur spécifique ou d'une catégorie d'utilisateur associée à un ou plusieurs autres profils dans la pluralité, pour déterminer les permissions à appliquer à la pluralité de spectateurs pour l'accès à un contenu depuis le noeud IPTV, dans lequel le traitement des permissions conditionnelles dans le premier profil (130) comprend l'application du deuxième ensemble de permissions en présence de l'utilisateur spécifique ou de la catégorie d'utilisateur avec l'un ou plusieurs autres profils, et dans lequel le deuxième ensemble de permissions est toujours octroyé pendant une période de mémoire tampon après le départ de l'utilisateur spécifique ou de la catégorie d'utilisateur avec l'un ou plusieurs autres profils.

2. Procédé selon la revendication 1, dans lequel l'étape de la réception est précédée par les étapes de :
la mise en concordance (118) d'une pluralité de visages dans une image acquise avec des motifs de reconnaissance faciale associés à des profils d'utilisateurs ; et
le transfert (120) de l'indication que la pluralité de spectateurs sont présents, chaque profil étant associé à l'un des spectateurs mis en concordance avec l'image acquise.

3. Procédé selon la revendication 2, dans lequel l'étape de la mise en concordance est précédée par l'étape de l'acquisition (116) de l'image.

4. Procédé selon la revendication 1, dans lequel le noeud IPTV est un décodeur (102).

5. Procédé selon la revendication 1, dans lequel le noeud IPTV est un élément d'infrastructure de réseau.

6. Procédé selon la revendication 1, dans lequel l'étape de la réception est précédée par l'acquisition d'une image à un décodeur, et la génération d'une indication identifiant la pluralité de spectateurs en fonction de l'image acquise au décodeur.

7. Procédé selon la revendication 1, dans lequel :
l'étape de la récupération est effectuée par un processeur (166) en relation avec une interface de base de données (166a), et dans lequel l'étape de la détermination des permissions est effectuée par un processeur accédant à une mémoire mémorisant un ensemble d'instructions, dans lequel l'étape du traitement des permissions conditionnelles consiste à déterminer les permissions à appliquer à la pluralité de spectateurs pour l'accès à un contenu depuis le noeud IPTV.

8. Procédé selon la revendication 1, dans lequel l'étape de la détermination comprend le réglage (122) des permissions sur la base du profil le plus restrictif dans la pluralité de profils récupérés.

9. Procédé selon la revendication 1, dans lequel l'étape du traitement des permissions conditionnelles pour déterminer les permissions à appliquer à la pluralité de spectateurs pour l'accès à un contenu depuis le noeud IPTV comprend le réglage (124) des permissions sur la base du profil le moins restrictif dans la pluralité de profils récupérés.

10. Procédé selon la revendication 1, dans lequel la période de mémoire tampon est égale à une durée fixe ou à une durée d'un programme.

11. Support lisible par machine comprenant l'un d'ensembles d'instructions, de séquences de codes et d'informations de configuration, qui, lorsqu'il est exécuté, amène un processeur à effectuer toutes les étapes d'un procédé selon l'une quelconque des revendications 1 à 9.

12. Système de gestion de permissions configuré pour déterminer des permissions d'accès à un contenu dans un noeud de télévision de protocole Internet, IPTV, comprenant :
un processeur de profils comportant :
une interface de communication (166b) configurée pour effectuer la réception d'une indication indiquant qu'une pluralité d'utilisateurs sont présents pour l'accès à un contenu, et
une interface de base de données (166a) configurée pour effectuer la récupération d'une pluralité de profils depuis une base de données de profils d'utilisateurs, chaque profil correspondant à l'un des utilisateurs dans la pluralité d'utilisateurs et comportant des permissions pour l'utilisateur correspondant afin de commander l'accès au contenu par l'utilisateur correspondant ;
dans lequel le processeur de profils est configuré pour effectuer :
- la détermination que la pluralité de profils récupérés comprennent un premier profil (130) comportant des permissions conditionnelles, dans lequel les permissions conditionnelles du premier profil comprennent un premier ensemble de permissions avec moins de droits d'accès et un deuxième ensemble de permissions avec plus de droits d'accès ; et
- le traitement des permissions conditionnelles dans le premier profil en fonction de l'utilisateur spécifique ou d'une catégorie d'utilisateur associée à un ou plusieurs autres profils dans la pluralité, pour déterminer les permissions à appliquer à la pluralité d'utilisateurs pour l'accès à un contenu, dans lequel le traitement des permissions conditionnelles dans le premier profil (130) comprend l'application du deuxième ensemble de permissions en présence de l'utilisateur spécifique ou de la catégorie d'utilisateur avec l'un ou plusieurs autres profils, et dans lequel le deuxième ensemble de permissions est toujours octroyé pendant une période de mémoire tampon après le départ de l'utilisateur spécifique ou de la catégorie d'utilisateur avec l'un ou plusieurs autres profils.

13. Système de gestion de permissions selon la revendication 11, comprenant en outre la base de données de profils d'utilisateurs (164), la base de données de profils d'utilisateurs étant configurée pour effectuer la mémorisation de profils associés à des utilisateurs ; ou
dans lequel l'interface de base de données est reliée, de manière opérationnelle, à un réseau de communication configuré pour accéder à distance à la base de données de profils d'utilisateurs ; ou
dans lequel l'interface de communication est reliée, de manière opérationnelle, à un réseau de communication configuré pour communiquer avec un moteur de reconnaissance situé à distance du système de gestion de permissions.

14. Système de gestion de permissions selon la revendication 11, comprenant en outre un moteur de reconnaissance (162) configuré pour effectuer :
- la réception d'une image de la pluralité d'utilisateurs en provenance d'un dispositif d'acquisition d'image (104) ;
- la génération d'une indication identifiant la pluralité d'utilisateurs en fonction de motifs de reconnaissance faciale mémorisés en association avec les profils mémorisés dans la base de données de profils d'utilisateurs et l'image reçue ; et
- le transfert de l'indication générée au processeur de profils.

15. Système de gestion de permissions selon la revendication 13, dans lequel le dispositif d'acquisition d'image est relié à un autre dispositif en communication avec le moteur de reconnaissance.
